(19) Europäisches Patentamt
European Patent Office
Office européen des brevets

(11) Numéro de publication : **0 289 390 B1**

# (12) FASCICULE DE BREVET EUROPEEN

(45) Date de publication du fascicule du brevet : **16.10.91 Bulletin 91/42**

(51) Int. Cl.[5] : **G21F 9/06**

(21) Numéro de dépôt : **88400936.6**

(22) Date de dépôt : **18.04.88**

## (54) Procédé d'élimination de la radioactivité d'effluents par extraction liquide-liquide.

Le dossier contient des informations techniques présentées postérieurement au dépôt de la demande et ne figurant pas dans le présent fascicule.

(30) Priorité : **28.04.87 FR 8706004**

(43) Date de publication de la demande : **02.11.88 Bulletin 88/44**

(45) Mention de la délivrance du brevet : **16.10.91 Bulletin 91/42**

(84) Etats contractants désignés : **AT BE CH DE ES FR GB GR IT LI LU NL SE**

(56) Documents cités :
**CHEMICAL ABSTRACTS, vol. 83, 1975, page 344, abrégé no. 33438r, Columbus, Ohio, US; F. SEBESTA et al.: "Synergistic extraction of radium using 2-thenoyltrifluoroacetone and tributyl phosphate or trioctylphosphine oxide", & J. RADIOANAL. CHEM. 1975, 24(2), 337-43**

(56) Documents cités :
**CHEMICAL ABSTRACTS, vol. 79, 1973, page 201, abrégé no. 140158p, Columbus, Ohio, US; W.M. JACKSON et al.: "Distribution studies of radium and other metallic elements between thenoyltrifluoroacetone in methyl isobutyl ketone and aqueous solutions"**
**Rodd's chemistry of Carbon Compounds, vol.1,partie D, pages 69,70 S.Coffey, Elsevier Publishing Company, 1965**

(73) Titulaire : **RHONE-POULENC CHIMIE**
**25, quai Paul Doumer**
**F-92408 Courbevoie Cédex (FR)**

(72) Inventeur : **Cailly, Francinet**
**42/52 rue de Villiers de l'Isle Adam**
**F-75020-Paris (FR)**
Inventeur : **Leveque, Alain**
**18, rue de Général Guillaumat**
**F-17000- La Rochelle (FR)**
Inventeur : **Sabot, Jean-Louis**
**3, Avenue Pascal**
**F-78600-Maisons/Laffitte (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

**EP 0 289 390 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé pour l'élimination de la radioactivité et plus précisément du radium, d'une solution aqueuse contenant un nitrate par extraction liquide-liquide.

De nombreux procédés hydrométallurgiques conduisent à des effluents radioactifs qu'il est nécessaire de traiter de façon à abaisser leur radioactivité en dessous d'un seuil imposé par la législation pour leur rejet dans les voies fluviales ou en mer.

On peut citer comme exemple de ces procédés les traitements, comportant notamment une lixiviation, des minerais uranifères ou des minerais de terres rares tels que la monazite ou l'apatite. Au cours de ces procédés, on récupère des composés d'uranium ou de terres rares et des effluents comportant en particulier du radium 226 et 228 en milieu nitrate notamment. Or, les réglementations les plus sévères imposent pour ces effluents une teneur maximale en radium d'au plus 30 p Ci/l pour le radium 228 et 10 p Ci/l pour le radium 226.

Un traitement connu pour la récupération de ces éléments radioactifs consiste en la précipitation d'un composé très peu soluble tel que le sulfate de baryum. On obtient ainsi un solide contenant les espèces radioactives que l'on peut tansporter vers un centre de traitement de déchets radioactifs.

Cependant cette technique de précipitation est coûteuse car le réactif ne peut être recyclé.

Par ailleurs, il est connu par le document Rodd's Chemistry of Carbon Compounds, Vol I, partie D pages 69, 70 de S. Coffey, Elsevier Publishing Company, 1965, que des β-dicétones donnent des chélates ou composés organo métalliques avec les métaux lourds bivalents. Les résumés Chemical Abstracts, vol 83, 1875 page 344 abrégé n° 33438 et vol 79, 1973, page 201 abrégé n° 140158p décrivent des procédés d'extraction du radium d'une solution aqueuse contenant des ions chlorures utilisant comme agent extractant une β-dicétone halogénée seule ou en mélange avec un composé phosphoré.

Ces procédés peuvent dans certains cas être trop peu efficaces notamment dans le cas d'efflents en milieu nitrate, les nitrates étant des agents complexants du radium.

L'objet principal de l'invention est donc un procédé permettant d'éliminer très efficacement le radium dans un effluent.

Dans ce but le procédé selon l'invention d'élimination de la radioactivité d'une solution aqueuse comprenant un nitrate et du radium, est caractérisé en ce qu'on met en contact ladite solution avec une phase organique initiale comprenant au moins un extractant choisi dans le groupe des produits de formule (1) :

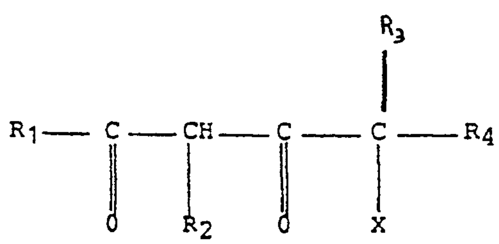

(1)

dans laquelle

$R_1$ est un radical alkyle, aryle, alkylaryle, arylalkyle, substitué ou non par un halogène, ou un hétérocyle ;
$R_2$ est l'hydrogène ou un radical alkyle ;
X est un halogène ;
$R_3$, $R_4$ sont identiques ou différents et peuvent être l'hydrogène, un halogène ou un radical alkyle substitué ou non par un halogène ; puis on récupère une phase organique finale chargée en radium et une phase aqueuse substantiellement purifiée en radium.

Le procédé d'extraction liquide-liquide de l'invention permet ainsi une élimination très poussée du radium et l'obtention d'effluents satisfaisant aux normes les plus sévères sur la radioactivité.

D'autres caractéristiques et avantages de l'invention seront mieux compris à la lecture de la description et de l'exemple concret mais non limitatif qui va suivre.

La solution aqueuse de départ contient donc du radium en milieu nitrate.

La quantité de radium peut varier dans une large gamme allant par exemple de 10 pCi/l à 10 µCi/l. Habituellement cette quantité se situe au voisinage de 1 µCi/l.

L'invention, comme indiqué plus haut, s'applique à un milieu nitrate. Généralement la solution aqueuse contient un nitrate d'ammonium ou un nitrate alcalin. La concentration en nitrate est habituellement d'au moins 0,5 M plus particulièrement au moins 1 M et peut varier par exemple entre 0,5 et 5 M et notamment 1 et 3 M.

Le pH de la solution aqueuse de départ est en principe au moins égal à 7, notamment compris entre 7 et

12 et plus particulièrement compris entre 7 et 9 pour un nitrate d'ammonium et 7 et 12 pour un nitrate alcalin. Au cas où le pH de la solution aqueuse à l'origine serait inférieur à 7, on ajuste de préférence ce pH à la valeur d'au moins 7 par addition par exemple et suivant le cas d'ammoniaque ou d'un hydroxyde alcalin.

La phase organique initiale va maintenant être décrite plus précisément.

Cette phase comporte tout d'abord au moins un extractant. Cet extractant est choisi dans la famille des β-dicétones halogénées de formule (1) donnée ci-dessus. D'une manière préférée on utilise les β-dicétones fluorées, c'est-à-dire celles pour lesquelles le radical X est le fluor, l'halogène substituant des radicaux $R_3$ et $R_4$ pouvant être le fluor ou un autre halogène et on emploie plus préférentiellement celles pour lesquelles X, $R_3$ et $R_4$ représentent tous le fluor.

La nature du radical $R_1$ peut varier largement. Ce peut être un radical alkyle, aryle, alkylaryle, arylalkyle, éventuellement substitué par un halogène notamment un fluor. $R_1$ peut être aussi un hétérocycle du type par exemple thénoyle, furoyle, pyrrolyle.

A titre d'exemple, on peut citer la fluoroacétylacétone, la difluoroacétylacétone, la trifluoroacétylacétone, la propionyltrifluoroacétone, l'isovaléryltrifluoroacétone, l'heptanoyltrifluoroacétone, la benzoyltrifluoroacétone, la thénoyl-2 trifluoroacétone, la p-fluorobenzoylltrifluooroacétone, la p-phénylbenzoyltrifluoroacétone, la β-naphtoyltrifluoroacétone, la furoyle-2-trifluoroacétone, la phénylacétyltrifluoroacétone, la phényle-3 propionyltrifluqoroacétone, la p-méthylbenzoyltrifluoracétone, la p-éthylbenzoyltrifluoroacétone.

Selon une variante particulière de l'invention on peut utiliser les β-dicétones fluorées de formule (1) dans laquelle $R_1$ est un radical phényle substitué par un radical alkyle de 1 à 25 atomes de carbone et plus préférentiellement les β-dicétones fluorées de formule :

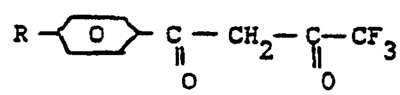

avec R radical alkyle tel que défini juste ci-dessus.

D'une manière avantageuse, la phase organique comporte en outre un diluant dans lequel l'extractant se trouve en solution.

Comme diluant on peut utiliser seul ou en mélange des composés tels que les hydrocarbures aliphatiques ou aromatiques, les solvants halogénés tels que par exemple le kérosène, le SOLVESSO ®, les produits du type FLUGENE ®.

Cette même phase organique peut aussi contenir un modifieur qui peut être par exemple un alcool à chaîne longue (de 6 à 14 atomes de carbone) ou un alkylphénol.

Selon un mode préféré de réalisation de l'invention, la phase organique initiale contient aussi un agent synergique qui est un composé choisi dans le groupe des agents organophosphorés neutres. Plus précisément, ce composé est choisi dans le groupe des phosphates, phosphonates, phosphinates et oxydes de phosphines et en particulier les dérivés alkyles, aryles ou alkylaryles de ceux-ci.

Dans le cas des phosphates ont peut citer le tributylphosphate.

Pour les phosphonates, on peut mentionner par exemple le dibutyl butyl phosphonate (DBBP), le di-éthyl-2 hexyl (éthyl-2 hexyl)phosphonate (DEHEHP), le bis (β chloroéthyl) vinyl phosphonate, le tétra-éthyl décylène diphosphonate $(C_2H_5O)_2 — OP\text{-}CH_2\text{-}(CH_2)_8\text{-}CH_2\text{-}PO(OC_2H_5)_2$, le tétra-éthyl butylène diphosphonate $(C_2H_5O)_2 — OP\text{-}CH_2\text{-}(CH_2)_2\text{-}CH_2\text{-}PO(OC_2H_5)_2$, le tétra-isopropyl méthyl méthylène diphosphonate $(iC_3H_7O)_2OP\text{-}CH(CH_3) — PO(iC_3H_7O)$.

En ce qui concerne les phosphinates on peut utiliser le dioctylméthylphosphinate, le di(éthyl-2 hexyl)éthyl — 2 hexyl phosphinate.

Pour les oxydes de phosphine on peut citer par exemple les oxydes de di-n-hexylmethoxyoctylphosphine (DHMOPO), de tri-n-butyl phosphine (TBPO), de trioctylphosphine (TOPO), de triéthyl-2 hexylphosphine, le mélange d'oxydes de phosphine commercialisé sous la marque CYANEY 923.

Un autre agent synergique possible peut être un composé du type sulfoxyde.

Pour les sulfoxydes, on citera le diheptylsulfoxyde et le méthyldodécylsulfoxyde.

La concentration du ou des extractants et éventuellement de l'agent synergique dans le diluant peut être comprise entre 10 et 90% en poids environ. Cette concentration est fonction notamment des propriétés physiques que l'on souhaite obtenir pour la phase organique initiale.

La quantité d'agent synergique mis en oeuvre peut varier dans de larges proportions, notamment entre 0,1 et 10 fois la quantité en poids d'extractant.

La température à laquelle se fait la mise en contact de la solution aqueuse et de la phase organique initiale,

n'est pas critique. Cette température peut être imposée par le procédé qui donne lieu à la solution aqueuse radioactive à traiter. Elle peut aussi dépendre de la nature de l'extractant utilisé. En pratique, cette température ira de l'ambiante à 80°C environ.

La mise en contact entre les deux phases précitées et l'extraction se fait d'une manière connue dans un appareillage du type mélangeur-décanteur ou colonne par exemple.

Avantageusement, l'extraction est réalisée en continu et à contre-courant sur plusieurs étages.

Après la mise en contact, on obtient une phase organique finale chargée en radium et une phase aqueuse dont la teneur en radium est extrêmement faible par exemple inférieur à 20 pCi/l.

La phase organique pourra ensuite être réextraite par une solution aqueuse acide, par exemple par une solution d'acide nitrique avec un rapport phase organique/phase aqueuse très élevée.

La phase organique pourra être recyclée à l'extraction et la phase aqueuse obtenue après la réextraction et chargée en radium, pourra être soumise à tout traitement connu pour récupérer cet élément.

Un exemple concret va maintenant être donné.

EXEMPLE

On part d'un effluent de composition suivante :

$NH_4 NO_3$ 200 g/L
$Ra^{228}$ 1 µCi/l

On met en contact sous agitation 1l de cette solution trois fois successivement avec à chaque fois 0,5 litre d'un solvant à base de LIX 51 produit commercialisé par HENKEL CHEMICAL et de formule :

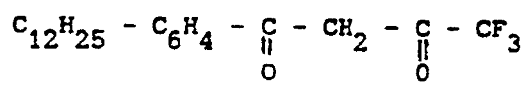

à 200 g/l, et de TOPO à 200 g/l dilué dans du kérosène. Au cours de l'agitation on introduit la quantité d'ammoniaque concentrée nécessaire pour atteindre pH = 8,2.

Après décantation et séparation des phases, on obtient un effluent de nitrate d'ammonium contenant

$NH_4 NO_3$ = 190 g/l
$Ra^{228}$ $\leqq$ 20 pCi/l (limite de détection)

Bien entendu, l'invention n'est nullement limitée aux modes de réalisation décrits qui n'ont été donnés qu'à titre d'exemples. En particulier, elle comprend tous les moyens constituants des équivalents techniques des moyens décrits ainsi que leurs combinaisons si celles-ci sont mises en oeuvre dans le cadre de la protection comme revendiquée.

## Revendications

1. Procédé d'élimination de la radioactivité d'une solution aqueuse comprenant un nitrate et du radium, caractérisé en ce qu'on met en contact ladite solution avec une phase organique initiale comprenant au moins un extractant choisi dans le groupe des produits de formule (1) :

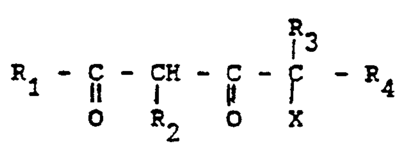
(1)

dans laquelle :

$R_1$ est un radical alkyle, aryle, alkylaryle, arylalkyle, substitué ou non par un halogène, ou un hétérocycle,
$R_2$ est l'hydrogène ou un radical alkyle ;
X est un halogène ;
$R_3$, $R_4$ sont identiques ou différents et peuvent être l'hydrogène, un halogène ou un radical alkyle substitué

ou non par un halogène ; puis on récupère une phase organique finale chargée en radium et une phase aqueuse substantiellement purifiée en radium.

2. Procédé selon la revendication 1 caractérisé en ce que l'extractant est choisi dans le groupe des produits de formule (1) dans laquelle X est le fluor.

3. Procédé selon la revendication 1 ou 2 caractérisé en ce que l'extractant est choisi dans le groupe des produits de formule (1) dans laquelle X, $R_3$ et $R_4$ sont le fluor.

4. Procédé selon l'une des revendications 1 à 3 caractérisé en ce que l'extractant est choisi dans le groupe des produits de formule (1) dans laquelle $R_1$ est un radical aryle, éventuellement substitué par un radical alkyle comprenant de 1 à 25 atomes de carbone.

5. Procédé selon l'une quelconque des revendications précédentes, caractérisé en ce que la phase organique initiale comprend en outre un composé choisi dans le groupe des agents organophosphorés neutres ou des sulfoxydes.

6. Procédé selon la revendication 5, caractérisé en ce que le composé précité est choisi dans le groupe des phosphates, phosphonates, phosphinates, oxydes de phosphines.

7. Procédé selon l'une quelconque des revendications précédentes caractérisé en ce que la phase organique initiale comprend un diluant.

8. Procédé selon la revendication 7, caractérisé en ce que le diluant est choisi dans le groupe comprenant les hydrocarbures aliphatiques, les hydrocarbures aromatiques, les solvants halogénés.

9. Procédé selon l'une quelconque des revendications précédentes, caractérisé en ce que la phase organique initiale comprend un modifieur.

10. Procédé selon l'une quelconque des revendications précédentes, caractérisé en ce que le pH de la solution aqueuse précitée est au moins égal à 7, notamment compris entre 7 et 12.

11. Procédé selon l'une quelconque des revendications précédentes, caractérisé en ce que la solution aqueuse précitée comprend un nitrate d'ammonium ou un nitrate alcalin.

12. Procédé selon l'une quelconque des revendications précédentes, caractérisé en ce que la concentration en nitrate dans la solution aqueuse de départ est au moins 0,5 M, plus particulièrement au moins 1 M.

13. Procédé selon l'une quelconque des revendications précédentes, caractérisé en ce que la phase organique finale est réextraite avec une solution aqueuse acide.

**Patentansprüche**

1. Verfahren zur Beseitigung der Radioaktivität einer ein Nitrat und Radium enthaltenden wäßrigen Lösung, dadurch gekennzeichnet, daß man diese Lösung mit einer organischen Ausgangsphase in Berührung bringt, die wenigstens ein Extraktionsmittel enthält, das aus der Gruppe der Produkte der Formel (1)

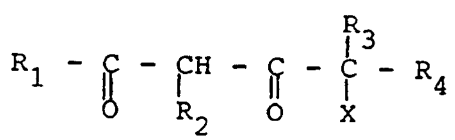

(1)

ausgewählt ist, in der

$R_1$ einen gegebenenfalls durch ein Halogen substituierten Alkyl-, Aryl-, Alkylaryl- und Arylalkylrest oder einen Heterocyclus,

$R_2$ Wasserstoff oder einen Alkylrest und

X ein Halogen bedeutet, und

$R_3$ und $R_4$ gleich oder verschieden sind und Wasserstoff, ein Halogen oder einen gegebenenfalls durch ein Halogen substituierten Alkylrest bedeuten können ; und anschließend eine radiumbelastete organische Endphase und eine im wesentlichen vom Radium gereinigte wäßrige Phase gewinnt.

2. Verfahren nach Anspruch 1, dadurch gekennzeichnet, daß das Extraktionsmittel aus der Gruppe der Produkte der Formel (1), in der X = Fluor bedeutet, ausgewählt ist.

3. Verfahren nach Anspruch 1 oder 2, dadurch gekennzeichnet, daß das Extraktionsmittel aus der Gruppe der Produkte der Formel (1), in der X, $R_3$ und $R_4$ Fluor sind, ausgewählt ist.

4. Verfahren nach einem der Ansprüche 1 bis 3, dadurch gekennzeichnet, daß das Extraktionsmittel aus der Gruppe der Produkte der Formel (1) ausgewählt ist, in der $R_1$ einen Arylrest bedeutet, der gegebenenfalls durch einen 1 bis 25 Kohlenstoffatome enthaltenden Alkylrest substituiert ist.

5. Verfahren nach einem der vorhergehenden Ansprüche, dadurch gekennzeichnet, daß die organische

Ausgangsphase außerdem eine Verbindung enthält, die aus der Gruppe der neutralen phosphororganischen Mittel oder der Sulfoxide ausgewählt ist.

6. Verfahren nach Anspruch 5, dadurch gekennzeichnet, daß diese Verbindung aus der Gruppe der Phosphate, Phosphonate, Phosphinate und Phosphinoxide ausgewählt ist.

7. Verfahren nach einem der vorhergehenden Ansprüche, dadurch gekennzeichnet, daß die organische Ausgangsphase ein Verdünnungsmittel enthält.

8. Verfahren nach Anspruch 7, dadurch gekennzeichnet, daß das Verdünnungsmittel aus der Gruppe ausgewählt ist, welche die aliphatischen und aromatischen Kohlenwasserstoffe und die halogenierten Lösungsmittel umfaßt.

9. Verfahren nach einem der vorhergehenden Ansprüche, dadurch gekennzeichnet, daß die organische Ausgangsphase ein Modifizierungsmittel enthält.

10. Verfahren nach einem der vorhergehenden Ansprüche, dadurch gekennzeichnet, daß der pH-Wert der wäßrigen Lösung wenigstens gleich 7 ist und insbesondere zwischen 7 und 12 liegt.

11. Verfahren nach einem der vorhergehenden Ansprüche, dadurch gekennzeichnet, daß die wäßrige Lösung ein Ammonium- oder ein Alkalinitrat enthält.

12. Verfahren nach einem der vorhergehenden Ansprüche, dadurch gekennzeichnet, daß die Nitratkonzentration der wäßrigen Ausgangslösung wenigstens 0,5 M und insbesondere wenigstens 1 M ist.

13. Verfahren nach einem der vorhergehenden Ansprüche, dadurch gekennzeichnet, daß die organische Endphase mit einer sauren wäßrigen Lösung reextrahiert wird.

## Claims

1. A process for removing radioactivity of an aqueous solution containing nitrate and radium, characterized in that the said solution is brought into contact with an initial organic phase comprising at least one extractant chosen from the group of products having the Formula (1) :

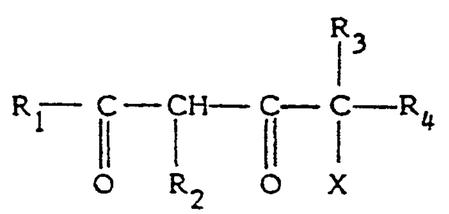

(1)

in which

$R_1$ is an unsubstituted or halogen-substituted alkyl, aryl, alkaryl or aralkyl radical or a heterocycle ;

$R_2$ is hydrogen or an alkyl radical ;

X is a halogen ;

$R_3$ and $R_4$ are the same or different and can be hydrogen, halogen or an unsubstituted or halogen-substituted alkyl radical ; then a final organic phase charged with radium and an aqueous phase substantially purified of radium are recovered.

2. A process according to Claim 1 characterized in that the extractant is chosen from the group of products of Formula (1) in which X is fluorine.

3. A process according to Claim 1 or 2 characterized in that the extractant is chosen from the group of products of Formula (1) in which X, $R_3$ and $R_4$ are fluorine.

4. A process according to any one of Claims 1 to 3 characterized in that the extractant is chosen from the group of products of formula (1) in which R is an aryl radical possibly substituted by a $C_{1-25}$ alkyl radical.

5. A process according to any one of the preceding claims characterized in that the starting organic phase contains inter alia a compound chosen from neutral organophosphorus agents and sulphoxides.

6. A process according to Claim 5 characterized in that the said compound is chosen from the group of phosphates, phosphonates, phosphinates and phosphine oxides.

7. A process according to any one of the preceding claims characterized in that the starting organic phase contains a diluent.

8. A process according to Claim 7 characterized in that the diluent is chosen from the group consisting of aliphatic hydrocarbons, aromatic hydrocarbons and halogenated solvents.

9. A process according to any one of the preceding claims characterized in that the starting organic phase contains a modifier.

10. A process according to any one of the preceding claims characterized in that the pH of the said aqueous solution is at least equal to 7, more particularly between 7 and 12.

11. A process according to any one of the preceding claims characterized in that the said aqueous solution contains ammonium nitrate or an alkalimetal nitrate.

12. A process according to any one of the preceding claims characterized in that the concentration of nitrate in the starting aqueous solution is at least 0.5 M, more particularly at least 1 M.

13. A process according to any one of the preceding claims characterized in that the final organic phase is re-extracted with an aqueous acid solution.